# EUROPÄISCHE PATENTANMELDUNG

(11) **EP 3 210 718 A2**
(43) Veröffentlichungstag der Anmeldung: **30.08.2017**
(21) Anmeldenummer: 17156971.8
(22) Anmeldetag: 20.02.2017
(51) Int. Cl.: B23Q 11/00, B23Q 1/54

(54) **BEARBEITUNGSEINHEIT FÜR EINE WERKZEUGMASCHINE UND WERKZEUGMASCHINE MIT EINER DERARTIGEN BEARBEITUNGSEINHEIT**

(30) Priorität: 26.02.2016 DE 102016203116
(71) Anmelder: DECKEL MAHO Pfronten GmbH, 87459 Pfronten (DE)
(72) Erfinder: Gänßle-Klenk, Frank, 87484 Nesselwang (DE)
(74) Vertreter: MERH-IP Matias Erny Reichl Hoffmann Patentanwälte PartG mbB

(57) **Zusammenfassung**

Die vorliegende Erfindung betrifft eine Bearbeitungseinheit (7) für eine Werkzeugmaschine, mit einer Trägerkopfbasis (8) welche an deren Rückseite einen an Achsführungen (6) ankoppelbaren und längsverschiebbar Schlitten aufweist, wobei ein Spindelträgerkopf (10) an der Trägerkopfbasis (8) verschwenkbar gehalten ist, wobei der Spindelträgerkopf (10) eine Spindel (11) mit einer Werkzeugaufnahme (12) aufweist. Aufgabe der vorliegenden Erfindung ist es, eine Bearbeitungseinheit (7) anzugeben, mit welcher die Präzision einer Werkzeugmaschine erhöht werden kann. Erfindungsgemäß ist die Trägerkopfbasis (8) mit einer Dämpfungseinheit (17) versehen. Gemäß eines nebengeordneten Aspektes betrifft die Erfindung eine Werkzeugmaschine, die die erfindungsgemäße Bearbeitungseinheit umfasst.

## Beschreibung

Die vorliegende Erfindung betrifft eine Bearbeitungseinheit für eine Werkzeugmaschine, insbesondere eine numerisch gesteuerte Werkzeugmaschine bzw. insbesondere eine numerisch gesteuerte Werkzeugmaschine mit einer Spindelvorrichtung mit einer werkzeugtragenden Arbeitsspindel.

Im Stand der Technik sind Werkzeugmaschinen bzw. numerisch gesteuerte Werkzeugmaschinen bekannt, an denen Werkstücke mittels Werkzeugen insbesondere zerspanend bearbeitet werden können. Hierbei sind z.B. Fräsmaschinen, Fräs/DrehMaschinen, Universal-Fräsmaschinen bzw. Bearbeitungszentren, insbesondere mit werkzeugtragenden Arbeitsspindeln bekannt.

Derartige Werkzeugmaschinen umfassen gegebenenfalls feststehende oder verfahrbare, eine Arbeitsspindel tragende Bearbeitungseinheiten, die z.B. als Spindelträgerschlitten, Spindelkopf oder Spindelstock bezeichnet werden können. Eine gattungsbemäße Bearbeitungseinheit ist beispielsweise mitsamt des Antriebsmechanismus der Spindel in der EP 1415 758 A1 beschrieben.

Bei zerspanender Bearbeitung von Werkstücken an derartigen Werkzeugmaschinen ergeben sich meist die Maßgaben einer hohen Bearbeitungspräzision bei einer hohen Oberflächengüte des bearbeiteten Werkstücks und einer hohen Produktivität bei einer hohen Arbeitsleistung der Werkzeugmaschine.

Die Arbeitsleistung der Werkzeugmaschine kann hierbei einerseits durch Reduzierung von Stillstandzeiten und andererseits durch erhöhte Bearbeitungseffizienz während der Bearbeitung erreicht werden, z.B. durch ein möglichst hohes Zeitspanvolumen bei der Bearbeitung des Werkstücks, welches durch schnelleren Vorschub während der Bearbeitung und/oder durch tieferes Eintauchen des Zerspanungswerkzeugs in das Werkstück erreicht werden kann. Da hierbei jedoch bei größerem Zeitspanvolumen bei der Bearbeitung größer werdende Schwingungen des Werkzeugs auftreten, wirkt sich eine gewünschte Erhöhung der Produktivität durch Erhöhung des Zeitspanvolumens in der Regel nachteilig auf die Bearbeitungspräzision und die erreichbare Oberflächengüte aus. Im Hinblick auf die vorstehenden Probleme ist es eine Aufgabe der vorliegenden Erfindung, eine verbesserte zerspanende Bearbeitung eines Werkstücks an einer Werkzeugmaschine zu ermöglichen, bei der sowohl eine möglichst hohe Bearbeitungspräzision mit hoher erreichbarer Oberflächengüte als auch zudem eine möglichst hohe Produktivität mit hohem Zeitspanvolumen erreicht werden kann.

Zur Lösung der vorstehend genannten Aufgabe wird gemäß der vorliegenden Erfindung eine Bearbeitungseinheit zum Einsatz an einer Werkzeugmaschine gemäß Anspruch 1 vorgeschlagen. Abhängige Ansprüche betreffen bevorzugte Ausführungsbeispiele.

Der Erfindung liegt hierbei der Erfindungsgedanke zugrunde, bei der Bearbeitung des Werkstücks auftretende Schwingungen zu dämpfen, so dass bei höherem Zeitspanvolumen aufgrund einer Schwingungsdämpfungseinheit an der die Arbeitsspindel tragende Bearbeitungseinheit der Werkzeugmaschine und der damit verbundenen Schwingungsdämpfung während der Bearbeitung des Werkstücks bei höheren Vorschubgeschwindigkeiten und/oder tieferem Eintauchen des Werkzeugs in das Werkstück zur Erhöhung der Produktivität und Arbeitsleistung der Werkzeugmaschine dennoch vorteilhaft eine deutlich erhöhte Bearbeitungspräzision und verbesserte Oberflächengüte erreichbar ist.

Erfindungsgemäß wird eine Bearbeitungseinheit für eine Werkzeugmaschine vorgeschlagen, die eine Trägerkopfbasis und einen eine werkzeugtragende Arbeitsspindel haltenden Spindelträgerkopf aufweist, wobei die Bearbeitungseinheit mit einer Dämpfungseinheit zur Dämpfung von bei der Bearbeitung eines Werkstücks an der Werkzeugmaschine auftretenden Schwingungen versehen ist.

Die Bearbeitungseinheit bzw. insbesondere der Spindelträgerkopf bzw. bevorzugt die Trägerkopfbasis der Bearbeitungseinheit kann hierzu mit einer Dämpfungseinheit versehen sein. Es hat sich bemerkenswerter Weise gezeigt, dass, obwohl die gesamte Trägerkopfbasis verschieblich bzw. verfahrbar gelagert ist, es möglich ist, eben an dieser eine Dämpfungseinheit vorzusehen.

Wenn diese Dämpfungseinheit möglichst nahe am Spindelträgerkopf vorgesehen ist, kann die Bearbeitungspräzision des Werkstücks stark verbessert werden.

Gemäß einer vorteilhaften Weiterbildung kann die Dämpfungseinheit an einer Außenseite eines Gehäuses der Trägerkopfbasis angeordnet sein.

Wenn nämlich die Dämpfungseinheit an einer Außenseite des Gehäuses angeordnet ist, wird im Inneren des Gehäuses der Trägerkopfbasis kein Raum belegt, der beispielsweise für das Getriebe und/oder einen Motor bzw. Antrieb genutzt werden kann.

Außerdem ist die Dämpfungseinheit somit leicht zu erreichen, zum Beispiel zur Wartung oder für eine An- bzw. Abbau derselben. Insbesondere kann es vorteilhaft sein, die Dämpfungseinheit derart an der Außenseite des Gehäuses vorzusehen, dass diese an einer leicht zugänglichen Stelle montiert ist.

Gemäß einer vorteilhaften Weiterbildung kann die Dämpfungseinheit als separates Element vorgesehen sein, welches als solches angebaut bzw. ein- und ausgebaut werden kann.

Hiernach kann die Dämpfungseinheit als selbständiges Ensemble an der Trägerkopfbasis angebracht sein und kann somit beispielsweise mittels Schrauben oder anderen Befestigungsmitteln leicht an dieser montiert werden und auch wieder von dieser demontiert werden. Durch diese Ausgestaltung kann in Abhängigkeit der für das zu bearbeitende Werkstück notwendigen Dämpfung entsprechend die Dämpfungseinheit angepasst bzw. ausgewechselt werden.

Gemäß einer bevorzugten Weiterbildung kann der Spindelträgerkopf um eine schräg zu der Verschiebungsrichtung des Schlittens verlaufende Achse verschwenkbar gelagert sein, so dass die Werkzeugaufnahme beim Verschwenken von einer Position in eine zweite Position verschwenkt werden kann.

Gerade bei einer solchen Ausgestaltung mit einer schräg verlaufenden Schwenkachse kann eben die Dämpfungseinheit derart vorgesehen sein, dass sich diese und der Spindelträgerkopf bei Verschwenken desselben nicht oder nicht wesentlich behindern.

Beispielsweise kann in diesem Fall nämlich die Dämpfungseinheit auf einer parallel zu der Verschwenkungsachse ausgerichteten und demnach ebenfalls schräg verlaufenden

Fläche der Trägerkopfbasis (des Gehäuses der Trägerkopfbasis) vorgesehen sein und somit ein Zusammenstoßen von Spindelträgerkopf und Dämpfungseinheit, während des Verschwenkens verhindert werden.

Gemäß einer bevorzugten Weiterbildung kann die Dämpfungseinheit eine uniaxiale Dämpfung gewährleisten, und insbesondere dazu eingerichtet ist, eine Dämpfung von Schwingungen in einer Hauptdämpfungswirkungsrichtung zu dämpfen

Soweit die Trägerkopfbasis mit deren Schlitten in Z-Richtung verschiebbar ist, kann bevorzugt eine Dämpfung in Richtung der Z-Achse gewährleistet werden. Soweit die Trägerkopfbasis mit deren Schlitten in X- oder Z-Richtung verschiebbar montiert ist, kann vorzugsweise eine Dämpfung in diese Richtungen gewährleistet werden.

Da Schwingungen jedoch generell in allen Richtungen auftreten können, ist es bevorzugt, dass ein oder mehrere Dämpfungseinheiten derart ausgestaltet sind, dass Schwingungen in allen Richtungen gedämpft werden können bzw. zumindest Hauptkomponenten der Schwingungsrichtungen gedämpft werden können.

Hierzu können bevorzugt mehrere Dämpfungseinheiten mit jeweiliger uniaxialer Dämpfung vorgesehen sein, deren Hauptdämpfungswirkungsrichtungen in unterschiedlichen Richtungen der Bearbeitungseinheit ausgerichtet sind.

Gemäß einer bevorzugten Weiterbildung kann die Dämpfungseinheit zumindest eine der folgenden Dämpfarten aufweisen: viskoelastisches Dämpfungselement, piezoelektrisches Dämpfungselement, elektrodynamisches Dämpfungselement und Quetschfilm-Dämpfungselement.

Generell kann für die Dämpfungseinheit auf den unterschiedlichsten im Stand der Technik bekannten Dämpfungsarten basieren. Jedoch hat sich gezeigt, dass die zuvor beschriebenen Arten von Dämpfungselementen, nämlich viskoelastisches Dämpfungselement, piezoelektrisches Dämpfungselement, elektrodynamisches Dämpfungselement und Quetschfilm-Dämpfungselement, oder eine Kombination dieser, die besten Dämpfungseigenschaften bei gleichzeitig geringen Baugrößen gewährleisten. Bei einem viskoelastischen Dämpfungselement ist beispielsweise ein Masseelement, wie z.B. ein Metallstück auf einem hochviskosen bzw. viskoelastischen Material gelagert bzw. an diesem befestigt.

Bei einem piezoelektrischen Dämpfungselement, wird demnach ein piezoelektrisches Material vorgesehen. Bei Vibration wird z.B. mittels einer Steuerung das piezoelektrische Material mit einer Spannung beaufschlagt, so dass sich dieses ausdehnt bzw. verkürzt um der Schwingung entgegenzuwirken und so eine Dämpfung zu gewährleisten. Solche piezoelektrischen Dämpfungselemente sind beispielsweise aus der DE 699 24923 T2 bekannt.

Durch Wahl eines geeigneten piezoelektrischen Materials und geeigneten Spannungen, kann eben ein solches piezoelektrisches Dämpfungselement wie es in der DE 699 24923 T2 für Skier beschrieben ist, an die Vibrationsfrequenzen, die üblicherweise in Werkzeugmaschinen auftreten, angepasst werden.

Bei einem elektrodynamischen Dämpfungselement können ein oder mehrere steuerbare Linearaktuatoren vorgesehen sein, um durch Steuerung des bzw. der Linearaktuatoren entgegen der Schwingung der auftretenden Schwingung entgegenzuwirken.

Bei einem Quetschfilm-Dämpfungselement wird aufgrund einer durch die Vibration verursachte Bewegung eines Masseelementes eine Flüssigkeit von einem ersten Kammerbereich in einen zweiten Kammerbereich gedrückt bzw. gesogen und durch den Flüssigkeitstransfer von dem ersten in den zweiten Kammerbereich, beispielsweise über einen Transferkammerbereich bzw. über Verbindungsbereiche bzw. - kanäle, kann eine Dämpfung gewährleistet werden. Ein solcher Dämpfer ist beispielsweise aus der EP 0 164 220 A2 bekannt.

Gemäß einer vorteilhaften Weiterbildung kann die die Dämpfungseinheit einen fluidischen Dämpfungsmechanismus mit einem Masse-Feder-System umfassen, insbesondere auf Basis einer Quetschfilm-Dämpfung und/oder auf Basis einer Drosselströmungsdämpfung.

Bevorzugt weist die Dämpfungseinheit ein mittels Federn vorgespanntes Masseelement auf, das an Führungen in einer Hauptdämpfungswirkungsrichtung schwingungsfähig gelagert ist.

Bevorzugt ist das Masseelement in einem fluidabgedichteten Innenraum der Dämpfungseinheit schwingungsfähig gelagert, und/oder Kammerbereiche des Innenraums sind zumindest teilweise mit einer Flüssigkeit gefüllt, insbesondere mit einem Öl.

Bevorzugt ist die Dämpfungseinheit dazu eingerichtet, ein Masseelement des Masse-Feder-System auszuwechseln, Federelemente des Masse-Feder-Systems einzusetzen bzw. herauszunehmen oder auszuwechseln, und/oder eine Flüssigkeit des fluidischen Dämpfungsmechanismus zu wechseln.

Gemäß einer vorteilhaften Weiterbildung kann die Dämpfungseinheit ein Gehäuse aufweisen, mit einer Kammer bzw. einem Innenraum, in dem ein an einem Federelement abgestütztes Masseelement schwingend gelagert ist, wobei in der Kammer (Innenraum) eine Flüssigkeit vorgesehen ist, welche bei Schwingung des Masseelementes von einem ersten zwischen dem Masseelement und einer Kammerwandung gebildeten Kammerbereich in einen zweiten zwischen dem Masseelement und der Kammerwandung gebildeten Kammerbereich transferiert wird bzw. transferierbar ist.

Diese vorteilhafte Weiterbildung ist eine spezifische Ausgestaltung eines solchen zuvor beschriebenen Quetschfilm-Dämpfungselementes. Hierbei kann nämlich das Masseelement an einem Federelement abgestützt sein, vorzugsweise aufgehängt oder in irgendeiner Art daran befestigt sein.

Das Federelement bringt das Masseelement immer in eine Ruheposition. Bei auftretenden Vibrationen wird dieses Masseelement ausgelenkt und drückt somit eine Flüssigkeit von einer ersten Kammer (Spalt bzw. spaltförmiger Kammerbereich) in eine zweite Kammer (Spalt bzw. spaltförmiger Kammerbereich) aufgrund der sich mit dieser Auslenkung verändernden Volumen der ersten und zweiten Spalt- bzw. Kammerbereiche.

Wenn nämlich durch die Vibration das Masseelement derart ausgelenkt wird, dass der erste Kammerbereich zwischen der Kammerwandung und dem Masseelement verkleinert wird und der zweite Kammerbereich zwischen der Kammerwandung und dem Masseelement vergrößert wird, wird die in dem ersten Kammerbereich enthaltene Flüssigkeit in den zweiten Kammerbereich gedrückt bzw. durch gleichzeitige Vergrößerung des Volumens des zweiten Kammerbereichs in den zweite Kammerbereich gesogen.

In Ausführungsbeispielen kann zumindest einer der Kammerbereiche an einer Unterseite des Innenraums des Dämpfungsgehäuses unterhalb des in axialer Richtung schwingenden Masseelements ausgebildet sein. Optional können ein oder mehrere der Kammerbereiche an einer Oberseite des Innenraums des Dämpfungsgehäuses oberhalb des in axialer Richtung schwingenden Masseelements ausgebildet sein.

In diesem Falle kann, wie vorstehend beschrieben, der Innenraum zumindest teilweise mit Flüssigkeit gefüllt sein, wobei bei teilweiser Füllung des Innenraums das Dämpfungselement derart an der Bearbeitungseinheit ausgerichtet ist, dass die axiale Schwingungsrichtung des Masseelements vertikal oder zumindest im Wesentlichen vertikal ausgerichtet ist (d.h. insbesondere derart, dass der/die an der Unterseite angeordnete(n) Kammerbereich(e) mit Flüssigkeit gefüllt sind, z.B. bei einem planar ausgebildeten Quetschfilm-Spalt im Bereich der Unterseite des Gehäuses bzw. an der Unterseite des Innenraums).

Hierbei reicht es vorteilhaft aus, nur ein kleines Volumen von Flüssigkeit in den Innenraum einzufüllen, derart, dass gerade der/die unteren Kammerbereich(e) bzw. Quetschfilm-Spalt mit Flüssigkeit befüllt sind bzw. gerade der Bereich des Innenraums derart gefüllt ist, dass der/die an der Unterseite angeordnete(n) Kammerbereich(e) bzw. ein planar ausgebildeter Quetschfilm-Spalt im Bereich der Unterseite des Gehäuses bzw. an der Unterseite des Innenraums mit Flüssigkeit bedeckt sind/ist.

Bei Oszillation des Masseelements kann das verwendete Öl bzw. die Flüssigkeit aus dem unteren Kammerbereich bzw. dem unteren Spalt radial nach außen gedrückt bzw. radial nach innen gesogen werden. Auf diesem physikalischen Effekt ("Squeeze-Film-Effekt") beruht die auf die Oszillation des Masseelements wirkende Dämpfung, die auch über eine starre Befestigung des Dämpfungselements an der Bearbeitungseinheit der Werkzeugmaschine Schwingungen an der Bearbeitungseinheit dämpft.

Die Dämpfungswirkung kann erhöht werden, wenn der Innenraum vollständig mit Flüssigkeit befüllt wird, so dass sowohl obere als auch untere Kammerbereiche bzw. Spalts, zwischen denen das Masseelement oszilliert, mit Flüssigkeit gefüllt sind, da der "Squeeze-Film-Effekt" dann phasenverschoben an der Ober- und der Unterseite des Innenraums an entsprechenden Kammerbereichen bzw. Spalts auftritt, wobei an einer Seite jeweils Flüssigkeit radial nach außen gedrückt wird, wenn auf der gegenüberliegenden Seite Flüssigkeit radial nach innen gesogen wird und umgekehrt.

Bei einer horizontalen bzw. im Wesentlichen horizontalen (oder flach schrägen) Ausrichtung der axialen Schwingungsrichtung des Masseelements der Dämpfungseinheit (z.B. zum Dämpfen von Schwingungen mit horizontaler Hauptkomponente) ist bevorzugt der Innenraum vollständig mit Flüssigkeit, insbesondere Öl, befüllt.

Gemäß einer vorteilhaften Weiterbildung kann die Kammer (Innenraum) in deren Umfangsrichtung eine zylindrische Form aufweisen und ober- und unterseitig von planaren Wandungen begrenzt sein; das Masseelement in seiner Umfangsrichtung eine zylindrische Form aufweisen und ebenso ober-und unterseitigvon planaren Wandungen begrenzt sein, wobei jeweils zwischen den einander gegenüberliegenden Umfangswandungen einen Transferkammerbereich und zwischen den jeweils oberseitigen bzw. unterseitigen planaren Wandungen einen oberseitigen bzw. unterseitigen Kammerbereich (erste, zweite Kammer, bzw. Quetschfilm-Spalts) gebildet wird, welche Kammerbereiche jeweils aufgrund der Schwingung des Masseelementes ein veränderbares Aufnahmevolumen aufweisen.

Eine solche Ausgestaltung stellt im Wesentlichen ein in dessen Aufsicht zylindrischen Quetschfilm-Dämpfer bereit, mit einer oberseitigen veränderbaren Kammer und einer unterseitigen veränderbaren Kammer und einer dazwischenliegenden Transferkammer mit zylindrischer Form, welche zwischen der zylindrischen Außenwandung des Masseelementes und der zylindrischen Innenwandung der Kammer gebildet wird.

Durch diese zylindrische, insbesondere in Querschnittrichtung runde Ausgestaltung, kann zum einen ein einfacher Herstellungsprozess gewählt werden, zum anderen ist eben auch die Massenverteilung in der Dämpfungseinheit hiermit ausgeglichen.

Im Wesentlichen weist in diesem Fall eben die Dämpfungseinheit ein zylindrisches Gehäuse, z. B. nach Art einer Trommel auf, mit einer Ober- und Unterseite und sich in Umfangsrichtung quer dazu erstreckenden zylindrischen Seitenwänden.

In diesem Gehäuse ist ein Masseelement vorgesehen. Dieses Masseelement kann aus einem Metall, insbesondere einem Metall mit hoher Dichte, sein.

Die gewählte Flüssigkeit und auch die gewählte Masse des Masseelementes können auf die erwarteten Vibrationsfrequenzen bei einer solchen Werkzeugmaschine abgestimmt werden. . Das Masseelement hat bevorzugt eine Masse von zwischen 50 und 120 kg, vorteilhafter Weise zwischen 75 und 150 kg, insbesondere 100 (+/- 5 kg).
Gemäß einer vorteilhaften Weiterbildung kann das Masseelement oberseitig und unterseitig von zumindest einem Federelement und bevorzugt mit einer Mehrzahl von Federelementen abgestützt werden.

Demnach ist es bevorzugt, dass nicht lediglich von einer Seite ein Federelement auf das Masseelement wirkt, sondern eben das Masseelement auf entgegengesetzten Seiten, nämlich ober- bzw. unterseitig von jeweils zumindest einem Federelement gestützt wird. Das Masseelement ist demnach zwischen zumindest zwei Federelementen gehalten. Als solche Federelemente können einfache Spiralfedern mitvorbestimmten auf die erwarteten Vibrationsfrequenzen abgestimmten Federkonstanten verwendet werden. Diese Federelemente stützen sich demnach zwischen der Oberseite der Kammer (Innenraum) und Oberseite des Masseelementes und Unterseite des Masseelementes bzw. Unterseite der Kammer (Innenraum) ab. Hierbei sei mit Oberseite jeweils die zu einer Unterseite entgegengesetzte Seite bezeichnet. Die Ober- und Unterseiten sind jeweils die Seiten, die in Längsrichtung die zylindrische Seitenwand begrenzen. Vorzugsweise bildet die Unterseite der Kammer (Innenraum) bzw. des Gehäuses der Dämpfungseinheit demnach einer Standfläche aus, an der die Dämpfungseinheit befestigt werden kann.

Durch die zuvor genannte Abstützung des Masseelementes zwischen den zumindest zwei Federelementen kann eine sichere Lagerung eben dieses erreicht werden.

Gemäß einer vorteilhaften Weiterbildung kann eine Vielzahl von einander gegenüberliegenden Federelementen entlang der Umfangswandung vorgesehen sein, welche das Masseelement oberseitig und unterseitig abstützen.

Hiernach ist insbesondere eine symmetrische Anordnung von Federelementen bevorzugt, vorzugsweise in gleichen Abständen entlang der Umfangsrichtung des Masseelements. So kann das Masseelement besonders sicher, insbesondere verkippsicher gelagert werden.

Gemäß einer vorteilhaften Weiterbildung kann das Federelement in einer Aufnahmebohrung an einer oberseitigen bzw. unterseitigen Wand des Masseelementes aufgenommen sein und an der entsprechend gegenüberliegenden Wandung der Kammer (Innenraum) befestigt sein.

In diesem Fall muss beispielsweise das Ende des Federelementes (z. B. einer Spiralfeder), welches in der Aufnahmebohrung an der oberseitigen bzw. unterseitigen Wand des Masseelementes aufgenommen ist, nicht fix mit dem Masseelement verbunden werden, sondern kann einfach nur in diese Bohrung eingesteckt werden.

An dem jeweils anderen Ende des Federelementes ist dieses, zur sicheren Befestigung in der Kammer (Innenraum) vorzugsweise fix mit der Innenwandung der Kammer (Innenraum) verbunden bzw. ragt in diese hinein und ist dort in der Kammerwand gehalten.

Gemäß einer bevorzugten Weiterbildung können zwischen der Oberseite der Kammer (Innenraum) und der Unterseite der Kammer verlaufende Längsführungseinrichtungen (Führungen) vorgesehen sein, so dass das Masseelement lediglich in Längsrichtung schwingend gelagert ist, insbesondere in Richtung der Führungen.

Damit der Transferkammerbereich in Umfangsrichtung homogen ist, sind entsprechend Längsführungseinrichtungen vorgesehen, an denen das Masseelement zwischen einer Ober- und Unterseite der Kammer (Innenraum) geführt wird.

Demnach ist das Masseelement im Wesentlichen, d.h. mit Ausnahme von Fertigungstoleranzen, lediglich in Längsrichtung in der Kammer (Innenraum) verschiebbar angeordnet und gewährleistet somit eine uniaxiale Dämpfung.

Gemäß einer vorteilhaften Weiterbildung können die Längsführungseinrichtungen durch Stäbe gebildet werden, welche durch zwischen der oberseitigen und unterseitigen Wand des Masseelements verlaufende Öffnungen ragen.

Diese Stäbe sind dementsprechend zwischen der oberseitigen Begrenzungswand der Kammer und der unterseitigen Begrenzungswand der Kammer, vorgesehen und durchragen das Masseelement, von dessen Ober- zu dessen Unterseite. Hierdurch wird eine besonders sichere Führung gewährleistet.

Gemäß einer bevorzugten Weiterbildung können die Öffnungen, durch welche die Stäbe hindurchragen, in gleichmäßigen Abständen entlang des Umfangs des Masseelementes vorgesehen sein. Ähnlich wie für die Federn zuvor beschrieben, welche vorzugsweise entlang des Umfangs des Masseelementes vorgesehen sind, kann durch diese symmetrische Ausgestaltung in Bezug auf die Öffnungen auch eine ausgeglichene Masseverteilung und eine sichere Führung gewährleistet werden.

Gemäß einer vorteilhaften Weiterbildung kann jeweils benachbart zu jeder Öffnung ein Federelement vorgesehen sein. Durch diese unmittelbare Nachbarschaft zwischen Führung und Federelement wird eine ganz besonders sichere uniaxiale Halterung des Masseelementes gewährleistet.

Insbesondere ist die Kombination bevorzugt, in der beides, nämlich die Federelemente und die Öffnungen entlang des Umfangs vorgesehen sind, wobei die Federn, bzw. die Bohrungen, in welche die Federn ragen, jeweils neben einer solchen Öffnung vorgesehen sind, auf einer radial inneren oder äußeren Seite, insbesondere jedoch auf einer radial inneren Seite zu der Öffnung.

Gemäß einer vorteilhaften Weiterbildung kann das Gehäuse temperiert sein. Da die Viskosität der Flüssigkeit in der Kammer von der Temperatur abhängt, kann es sehr vorteilhaft sein, das Gehäuse zu temperieren und somit die Dämpfungseigenschaft eben auch über die Temperatur zu steuern.

Bei erhöhter Temperatur der Flüssigkeit kann deren Viskosität abnehmen und demnach eine Dämpfung in einem anderen Viskositätsbereich gewährleistet werden, als bei niedrigen Temperaturen der Flüssigkeit.

Die Temperierung kann beispielsweise mit einer Steuervorrichtung gekoppelt sein, die die auftretenden Schwingungsfrequenzen misst und durch die Temperierung des Gehäuses die entsprechenden Dämpfungseigenschaften an die gemessenen Schwingungsfrequenzen anpasst. Eine solche Ausgestaltung wird beispielsweise durch eine entsprechende Regelung der Steuereinrichtung gewährleistet.

Bevorzugt ist eine Temperatur des Gehäuses einstellbar. Besonders bevorzugt weist eine Temperatursteuerung zum Einstellen der Temperatur des Gehäuses einen Vibrationssensor auf, dessen Vibrationssensorsignal zur Regelung der Temperatur des Gehäuses der Temperatursteuerung zugeführt wird.

Hierbei kann die Temperatur auch gesteuert variiert werden, um gezielt das gewünschte Dämpfungsverhalten durch Einstellen der entsprechend benötigten Viskosität der Flüssigkeit zu steuern.

Bei Verwendung eines Vibrationssensors ist es in besonders vorteilhaften Ausführungsbeispielen auch möglich, einen Regelkreis einzurichten, der die eingestellte Temperatur der Flüssigkeit im Quetschfilm-Dämpfungselement in Abhängigkeit eines Sensorsignals des Vibrationssensors regelt, um dadurch indirekt die Viskosität der Flüssigkeit und folglich indirekt das Schwingungsverhalten zu regeln, um die auftretenden Schwingungen optimiert zu dämpfen.

Gemäß einer vorteilhaften Weiterbildung kann das Gehäuse eine Bodenfläche aufweisen, welche auf einem Dämpfungseinrichtungsständer montiert ist, welcher an einer Außenwandung der Trägerkopfbasis montiert ist.

Die Bodenfläche des Gehäuses ist hierbei üblicherweise die Unterseite des Gehäuses. Das heißt das Masseelement schwingt in Längsrichtung, d. h. vertikaler Richtung zur Bodenfläche. Über diese Bodenfläche ist die Dämpfungseinheit montiert. Insbesondere kann die translatorische Bewegung des Masseelementes senkrecht zu der Bodenfläche sein.

Gemäß einer bevorzugten Weiterbildung der Erfindung kann der Dämpfungseinrichtungsständer eine Standfläche für das Gehäuse aufweisen und eine Befestigungsfläche zur Befestigungsfläche einer Trägerkopfbasis, wobei die Standfläche senkrecht zu der Bewegungsrichtung der Trägerkopfbasis ausgerichtet ist und die Befestigungsfläche im Wesentlichen parallel zu der Schwenkachse des Spindelträgerkopfes ausgerichtet ist.

Hierdurch wird gewährleistet, dass die Dämpfungseinrichtung waagerecht auf einer schrägen Gehäusefläche der Trägerkopfbasis steht. Diese schräge Gehäusefläche ist vorzugsweise parallel zu der Schwenkachse ausgerichtet, damit die Dämpfungseinheit und der Spindelträgerkopf bei Verschwenken desselben nicht aneinanderstoßen.

Gemäß einem nebengeordneten Aspekt schlägt die Erfindung auch eine Werkzeugmaschine mit einer Bearbeitungseinheit gemäß zumindest einem der vorstehenden Aspekte vor.

Gemäß einem nebengeordneten Aspekt schlägt die Erfindung auch eine Werkzeugmaschine mit einem in einer ersten Richtung auf ersten Achsführungen verschiebbaren Schlitten mit einer Werkstückhalterung, einem auf zweiten Achsführungen in einer zweiten Richtung auf zweiten Achsführungen verschiebbaren zweiten Schlitten, welcher in einer dritten Richtung verlaufende Achsführungen aufweist und einer Bearbeitungseinheit nach einem der vorherigen Aspekte vor.

Hierbei ist die Bearbeitungseinheit bzw. der längsverschiebbare Schlitten der Bearbeitungseinheit auf den in Y-Richtung verlaufenden Achsführungen des zweiten Schlittens gelagert.

Zudem sei hervorgehoben, dass die vorstehenden Aspekte der Dämpfungseinheit auch unabhängig von einer Werkzeugmaschine bzw. unabhängig von einer Bearbeitungseinheit einer Werkzeugmaschine bereitgestellt werden können.

Beispielsweise wird unabhängig eine Dämpfungseinheit vorgeschlagen, die einen fluidischen Dämpfungsmechanismus mit einem Masse-Feder-System umfasst, insbesondere auf Basis einer Quetschfilm-Dämpfung und/oder auf Basis einer Drosselströmungsdämpfung. Dieser unabhängige Aspekt ist mit allen Merkmalen der vorstehenden Aspekte und der nachfolgenden Ausführungsbeispiele kombinierbar.

Insbesondere ist das vorgeschlagene Dämpfungssystem nicht auf Maschinenkinematiken von Werkzeugmaschinen begrenzt, sondern kann universell an allen Systemen eingesetzt werden, an denen Schwingungen gedämpft werden sollen (z.B. an Maschinen, Maschinenbauteilen, Motorblöcken, Strukturen, Bauwerken, Getrieben, Fahrzeugkarosserien, etc.).

Weitere Vorteile und Einzelheiten der Erfindung bzw. beispielhafter Ausführungen ergeben sich aus nachfolgend dargestellten Ausführungsbeispielen in Verbindung mit der Zeichnung.

In dieser zeigen
- Figur 1: eine beispielhafte Perspektivdarstellung einer aus dem Stand der Technik bekannten Werkzeugmaschine,
- Figur 2: eine beispielhafte schematische Darstellung des Innenlebens der Bearbeitungseinheit der in Figur 1 gezeigten Werkzeugmaschine,
- Figur 3A: eine beispielhafte schematische Seitendarstellung einer Bearbeitungseinheit für eine Werkzeugmaschine mit einer daran vorgesehenen Dämpfungseinheit gemäß einem Ausführungsbeispiel der Erfindung,
- Figur 3B: eine beispielhafte schematische Seitendarstellung der Bearbeitungseinheit aus Figur 3A mit der daran vorgesehenen Dämpfungseinheit in einer anderen Schwenkstellung eines Spindelträgerkopfs der Bearbeitungseinheit, und
- Figur 4: eine beispielhafte Darstellung einer Dämpfungseinheit gemäß einem Ausführungsbeispiel.

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

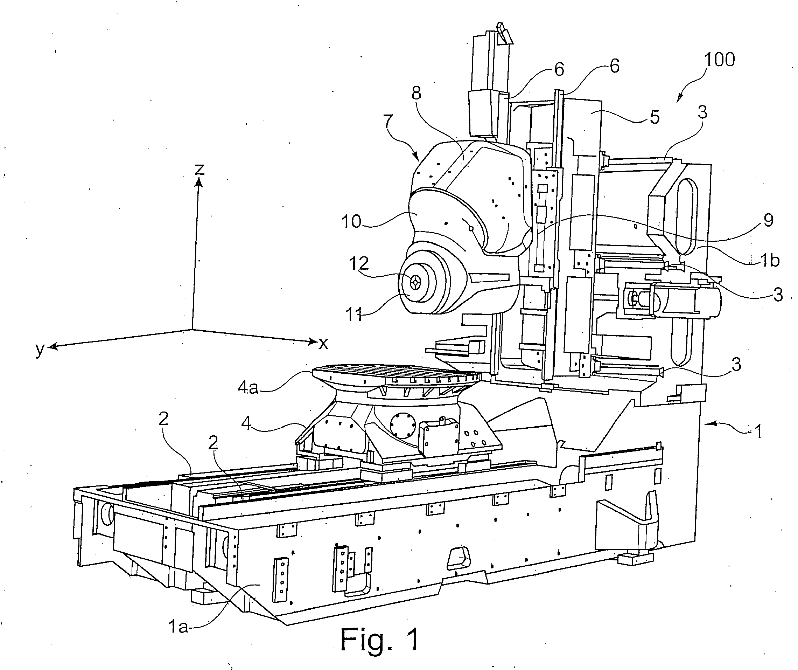

In Figur 1 ist ein Beispiel einer aus dem Stand der Technik bekannten Werkzeugmaschine 100 mit beispielhaft fünf Achsen, umfassend drei linear verfahrbare Achsen und zwei Rundachsen, dargestellt.

Die Werkzeugmaschine 100 kann über eine nicht dargestellte numerische Steuerung steuerbar sein, insbesondere zum Steuern der Verfahrbewegungen der drei Linearachsen und der zwei Rundachsen zum Steuern einer Relativbewegung zwischen dem zu bearbeitenden Werkstück und dem das Werkstück bearbeitenden, an einer Spindel der Werkzeugmaschine 100 aufgenommenen Werkzeugs.

Hierbei ist auf einem Unterteil 1a (Maschinenbett) eines in Seitenansicht beispielhaft L-förmigen Rahmens 1 (Maschinengestell) der Werkzeugmaschine 100 beispielhaft ein Paar in Y-Richtung horizontal verlaufende erste Achsführungen 2 angeordnet und senkrecht dazu verlaufend an einem Seitenteil 1b (Maschinenständer) des Rahmens 1 der Werkzeugmaschine 100 in X-Richtung horizontal verlaufende zweite Achsführungen 3.

Auf einem ersten (Y-Achs-)Schlitten 4 einer Y-Achse (erste Linearachse), welcher auf den ersten Achsführungen 2 in Y-Richtung längsverschieblich bzw. verfahrbar gelagert ist, ist ein Drehtisch 4a angeordnet, auf dem eine Werkstückhalterung vorgesehen sein kann.

Beispielhaft kann auf dem Drehtisch 4a der rotatorisch antreibbaren Rundachse ein zu bearbeitendes Werkstück gehalten bzw. eingespannt werden, das mittels der Rundachse durch Drehen des Drehtischs 4a um eine vertikale Drehachse rotiert werden kann, bevorzugt um mindestens 360 Grad oder mehr und mittels der Y-Achse durch Verfahren des Schlittens 4 in Y-Richtung linear verfahren werden kann.

Auf den zweiten Achsführungen 3 ist ein in X-Richtung querverschieblicher bzw. verfahrbarer zweiter (X-Achs-)Schlitten 5 einer X-Achse (zweite Linearachse) vorgesehen, welcher beispielhaft in Höhenrichtung eine stabförmige Ausgestaltung hat, um Achsführungen 6 einer vertikalen Z-Achse (dritte Linearachse) entlang der gesamten Höhe der Achsführungen 6 zu halten. Auf der von den zweiten Achsführungen 3 abgewandten Seite des zweiten Schlittens 5 sind somit in beispielhaft die in vertikaler Z-Richtung verlaufenden dritten Achsführungen 6 vorgesehen.

In Höhenrichtung (Z-Richtung) der in Figur 1 gezeigten Werkzeugmaschine 100 ist weiterhin beispielhaft eine Bearbeitungseinheit 7 (Fräskopf bzw. Spindelkopf, bzw. Spindelstock) an einem in Z-Richtung längsverschieblich bzw. verfahrbar gelagerten dritten (Z-Achs-)Schlitten 9 der vertikalen Z-Achse gehalten bzw. angebracht. Die Bearbeitungseinheit 7 weist beispielhaft eine Trägerkopfbasis 8 auf. Der rückseitige Teil der Trägerkopfbasis 8, ist an dem dritten Schlitten 9 angeordnet und ist somit in Höhenrichtung der Werkzeugmaschine vertikal verfahrbar auf den dritten Achsführungen 6 gelagert.

Insbesondere kann die Bearbeitungseinheit 7 folglich beispielhaft mittels der X-Achse durch Verfahren des Schlittens 5 in X-Richtung horizontal und quer zur Y-Richtung linear verfahren werden und mittels der Z-Achse durch Verfahren des Schlittens 9 in Z-Richtung vertikal linear verfahren werden.

Auf einer dem dritten Schlitten 9 gegenüberliegenden Seite der Trägerkopfbasis 8 ist beispielhaft an dieser verschwenkbar angeordnet ein Spindelträgerkopf 10 (z.B. Schwenkkopf) gehalten, welcher eine Arbeitsspindel 11 trägt, an welcher eine Werkzeugaufnahme 12 vorgesehen ist, an welcher ein entsprechendes Werkzeug, beispielsweise ein Schneidwerkzeug, ein Bohrwerkzeug bzw. Fräswerkzeug zur Bearbeitung eines auf dem Drehtisch 4a eingespannten Werkstücks aufgenommen werden kann.

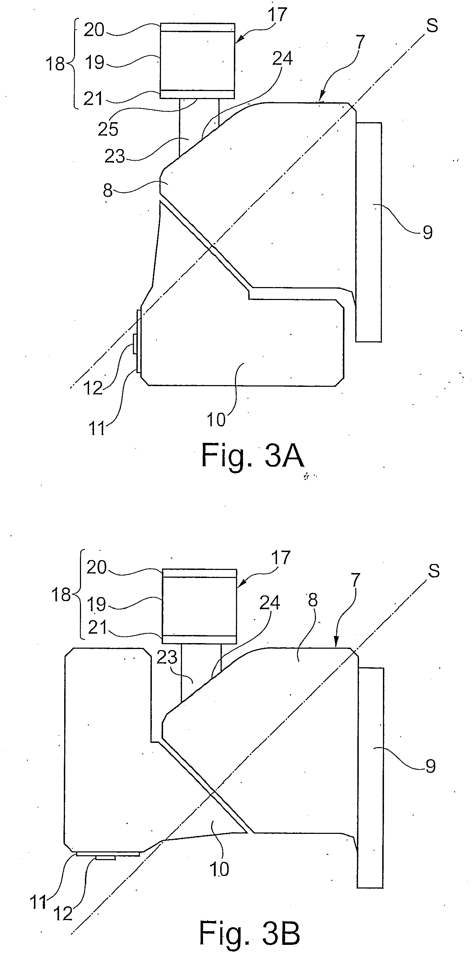

Der Spindelträgerkopf 10 ist beispielhaft um eine schräge Schwenkachse S schräg zur Z-Achse bzw. schräg zu den dritten Achsführungen 6 bzw. der Verschiebungsrichtung des dritten Schlittens 9 verschwenkbar gelagert (siehe auch Figuren 3A und 3B), so dass dieser zwischen der in Figur 1 dargestellten ersten Position mit horizontal ausgerichteter Spindelachse der Spindel 11 und einer zweiten Position mit vertikal ausgerichteter Spindelachse der Spindel 11 verschwenkt werden kann.

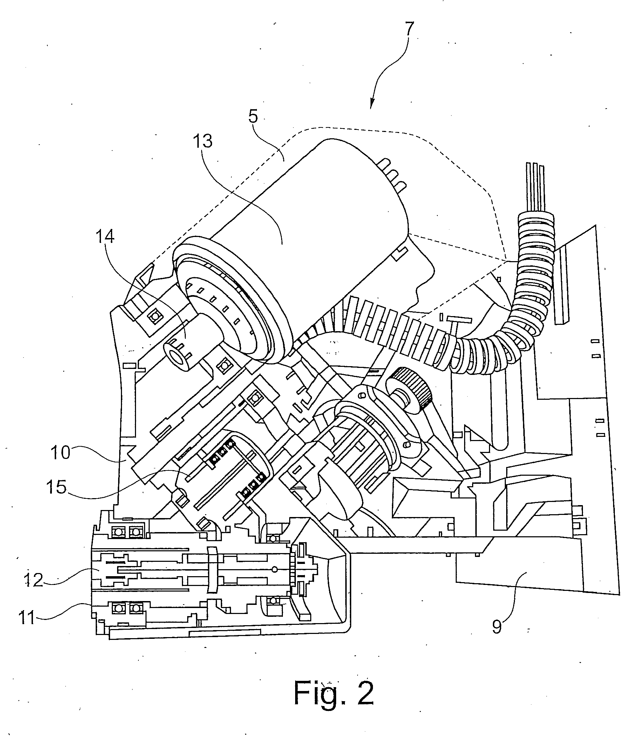

Die Spindel 11 kann über ein in dem Spindelträgerkopf 10 vorgesehenes Getriebe angetrieben werden (siehe z.B. Figur 2). Eine beispielhafte Bearbeitungseinheit 7 einer aus dem Stand der Technik bekannten Werkzeugmaschine ist in beispielhafter schematischer Darstellung in Figur 2 dargestellt.

Innerhalb der Trägerkopfbasis 8 ist beispielhaft ein Motor 13 angeordnet, der eine Welle 14 rotatorisch antreibt. Über ein Zahnradensemble, welches ein Getriebe 15 ausbildet, wird eine Rotationsbewegung der Welle 14 auf die Spindel 11 übertragen, die mit der Werkzeugaufnahme 12 an deren frontseitigem Ende (vgl. Figur 1) versehen ist, zum rotatorischen Anreiben eines an der Werkzeugaufnahme 12 aufgenommenen Werkzeugs.

In Bezug auf einen beispielhaften Aufbau des Getriebes 15 und den Verschwenkmechanismus der Schwenkachse zwischen der Trägerkopfbasis 8 und dem Spindelträgerkopf 10 sei auf die EP 1415 758 A1 verwiesen.

In den Figuren 3A und 3B ist schematisch die Bearbeitungseinheit 7 aus Figuren 1 und 2 dargestellt, wobei die Trägerkopfbasis 8 erfindungsgemäß mit einer Dämpfungseinheit 17 versehen ist, die lediglich beispielhaft auf der Oberseite der Trägerkopfbasis 8 angeordnet ist.

Die Erfindung ist jedoch nicht auf Ausführungsbeispiele beschränkt, in denen eine Dämpfungseinheit 17 auf der Oberseite der Trägerkopfbasis 8 abgeordnet bzw. angebracht ist, sondern eine oder mehrere Dämpfungseinheiten können auch an anderen Stellen der Trägerkopfbasis 8 abgeordnet bzw. angebracht sein, und/oder auch an dem Spindelträgerkopf 10.

Des Weiteren ist die vorliegende Erfindung nicht auf Bearbeitungseinheiten mit Schwenkachse bzw. mit zwei zueinander verschwenkbaren Trägerabschnitten begrenzt, sondern kann auf verschiedenste spindeltragende Bearbeitungseinheiten bzw. Spindel- oder Fräsköpfe mit werkzeugtragenden Arbeitsspindeln für Werkzeugmaschinen ausgedehnt werden.

Im in den Figuren 3A und 3B dargestellten Fall ist als Dämpfungselement 17 beispielhaft ein separates Element vorgesehen, das an der Außenseite des Gehäuses der Bearbeitungseinheit 7 angeordnet ist.

Jedoch ist die vorliegende Erfindung nicht auf derartige außenseitig angeordnete Dämpfungselemente 17 beschränkt, sondern ein oder mehrere Dämpfungselemente 17 können in der Bearbeitungseinheit 7 integriert sein und insbesondere im Inneren der Bearbeitungseinheit 7 bzw. der Trägerkopfbasis 8 und/oder des Spindelträgerkopfs 10 eingebaut sein.

Weiterhin können Dämpfungselemente zusätzlich oder alternativ auch an anderen Stellen der Werkzeugmaschine 100 angeordnet sein, so z.B. am Maschinengestell, am Maschinenbett, an den Achsschlitten und/oder an dem Drehtisch bzw. an einer oder benachbart zu einer Werkstückeinspanneinrichtung.

Das Dämpfungselement 17 der Figuren 3A und 3B weist beispielhaft ein Gehäuse 18 auf, mit einer beispielhaft zylindrischen Umfangswandung 19, einer beispielhaft planaren Oberseitenwandung 20 (Deckelabschnitt) und einer beispielhaft planaren Unterseitenwandung 21 (Bodenabschnitt). Diese Wandungen 19, 20, 21 bilden im Inneren des Gehäuses 18 einen beispielhaft zylindrischen Innenraum 22, in dem schwingungsdämpfende Dämpfungsmechanismen bzw. Dämpfungselemente vorgesehen sein können.

Die Unterseitenwandung 21 des Gehäuses 18 bildet beispielhaft die Standfläche der Dämpfungseinheit 17 und ist beispielhaft auf einem schematisch dargestellten Dämpfungseinrichtungsständer 23 montiert. Dieser Dämpfungseinrichtungsständer 23 ist zum Beispiel ein separates Element und kann beispielsweise aus Metall oder Kunststoff hergestellt sein.

Der Dämpfungseinrichtungsständer 23 weist beispielhaft eine Befestigungsfläche 24 auf, mittels welcher der Dämpfungseinrichtungsständer 23 an einer Gehäusewandung der Trägerkopfbasis 8 befestigt ist. Zudem weist der Dämpfungseinrichtungsständer 23 beispielhaft eine Standfläche 25 auf, über welche die Unterseitenwandung 21 des Gehäuses 18 an dem Dämpfungseinrichtungsständer 23 befestigt ist.

Die Standfläche 25 und die Befestigungsfläche 24 weisen beispielhaft Winkel von ca. 45 Grad zueinander auf, insbesondere da eine entsprechende Schrägfläche an der Oberseite des Gehäuses der Trägerkopfbasis 8 ebenfalls schräg angestellt ist.

Die Befestigungsfläche 24 und auch die Schrägfläche an der Oberseite des Gehäuses der Trägerkopfbasis 8 liegen im Wesentlichen parallel zu der Schwenkachse S, die beispielhaft schräg mit einem Winkel von ca. 45 Grad zur Z-Achse (vgl. Figur 1) verläuft.

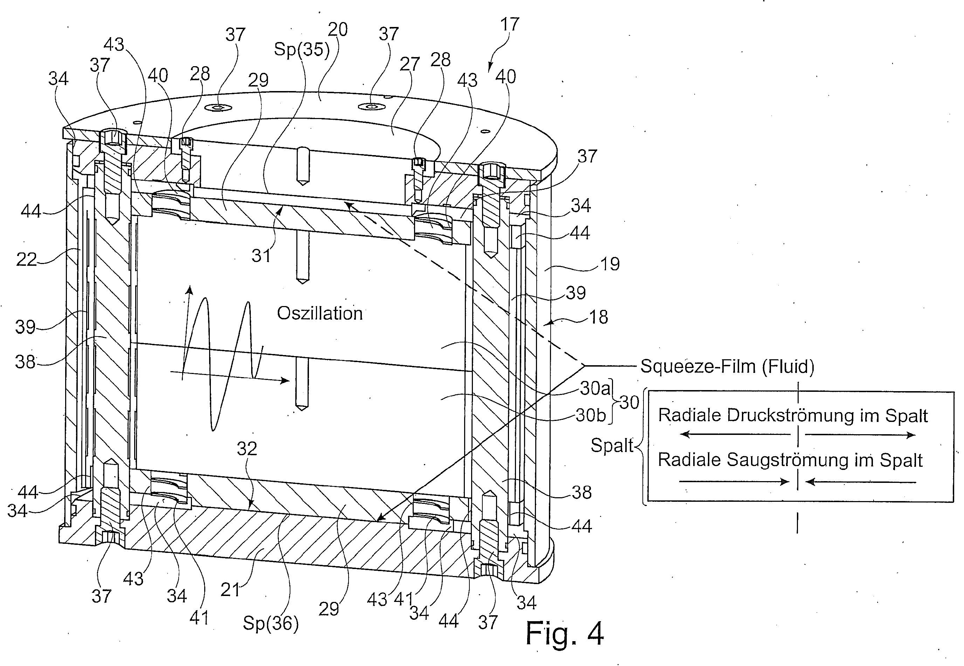

Je spitzer der Winkel zwischen Z-Achse und Schwenkachse S ist, desto größer kann der Winkel zwischen Befestigungsfläche 24 und Standfläche 25 sein. Die beiden Winkel (Winkel zwischen Befestigungsfläche 24 und Standfläche 25 und Winkel der Schenkachse S zur Z-Achse) ergeben insgesamt jedoch beispielhaft 90 Grad, so dass die Unterseitenwandung 21 der Dämpfungseinheit 17 planar steht und die Dämpfungseinheit 17 senkrecht steht (wobei in Ausführungsbeispielen ein in deren Innenraum 22 vorgesehenes Masseelement 30 translatorisch bewegbar gehalten sein kann, z.B. in vertikaler Z-Richtung; siehe Figur 4).

Ein Dämpfungseinrichtungsständer 23 ist nicht unbedingt notwendig. Alternativ kann das Gehäuse 18 der Dämpfungseinheit auch unmittelbar ohne Zwischenschaltung eines solchen Dämpfungseinrichtungsständers 23 an einem Gehäuse der Bearbeitungseinheit bzw. der Trägerkopfbasis 8 befestigt werden, oder in deren Inneren angeordnet sein.

Eine beispielhafte Dämpfungseinheit 17 gemäß einem nicht einschränkend aufzufassenden Ausführungsbeispiel ist in Schnittdarstellung beispielhaft in Figur 4 gezeigt. Beispielhaft wird in diesem vorliegenden Ausführungsbeispiel eine "Quetsch-Film" bzw. "Squeeze-Film" basierte Dämpfungseinheit vorgeschlagen.

Im vorliegenden Ausführungsbeispiel ist die Dämpfungseinheit 17 somit beispielhaft als ein Quetschfilm-Dämpfungselement (welches auch als so genannter Squeeze-Film-Dämpfer bezeichnet wird) ausgebildet. Alternativ kann jedoch jedes bekannte Dämpfungselement als Dämpfungseinheit Verwendung finden. Eine solche Dämpfungseinheit kann auch ein viskoelastisches Dämpfungselement, ein elektrodynamisches Dämpfungselement und/oder ein piezoelektrisches Dämpfungselement, oder eine Kombination derselben, enthalten.

Das Gehäuse 18 der Dämpfungseinheit 17 umfasst im vorliegenden Fall im Wesentlichen die beispielhaft zylindrische Umfangswandung 19, sowie einen in Längsrichtung den Innenraum 22 nach oben begrenzenden Deckel bzw. Deckelabschnitt 20 der die Oberseitenwandung bildet und einen in Längsrichtung den Innenraum 22 nach unten begrenzenden Boden bzw. Bodenabschnitt 21 der die Unterseitenwandung bildet.

In Figur 4 ist der obere Deckel 20 des Gehäuses 18 lediglich beispielhaft mit einem zentralen Plattenelement 27 versehen, das mittels der Schrauben 28 oder anderer Befestigungsmittel den Innenraum 22 dichtend und insbesondere flüssigkeitsdichtend abschließt. Hierbei kann die Wanddicke des Plattenelements 27 derart gewählt sein, dass ein unter dem Plattenelement 27 gebildeter Spalt der Quetschfilmdämpfung mit einer gewünschten Spaltbreite in Abhängigkeit der gewünschten Dämpfungswirkung der Quetschfilmdämpfung eingestellt werden kann. Durch Austausch des Plattenelements 27 mit einem Plattenelement anderer Wanddicke kann eine andere Spaltbreite eingestellt werden. Soweit das Plattenelement 27 abgenommen wird, kann zudem beispielsweise Flüssigkeit in den Innenraum 22 nachgefüllt bzw. ausgewechselt werden.

Innerhalb des Innenraums 22 ist ein im vorliegenden Fall lediglich beispielhaft aus zwei zylindrischen Scheiben 30a und 30b aufgebautes Masseelement 30 angeordnet. Die Außenumfangsfläche des Masseelements 30 hat beispielhaft eine zylindrische Form und entspricht beispielhaft der Form der zylindrischen Innenumfangsfläche des Gehäuses 18, welche den Innenraum 22 begrenzt (Außenumfangswandung des Innenraums).

Das Masseelement 30 wird oberseitig und unterseitig jeweils von einem oberseitigen Halteelement 29 und einem unterseitigen Halteelement 29 bzw. zwischen den ober- und unterseitigen Halteelementen 29 gehalten. Die Halteelemente 29 sind beispielhaft jeweils scheibenförmig ausgebildet.

Vertikal erstrecken sich zwischen dem Deckelabschnitt 20 und dem Bodenabschnitt 21 jeweilige stabförmige Führungselemente 38, die an Deckelabschnitt 20 und Bodenabschnitt 21 beispielhaft jeweils mittels Schrauben 37 befestigt sind. An dem Deckel 20 und dem Boden 21 des Gehäuses 18 sind somit beispielhaft als Führungselemente dienende Stäbe 38 vorgesehen, die als separate Elemente gebildet sind und mittels der Schrauben 37 oder anderen Befestigungsmittel mit dem entsprechenden Deckel bzw. Boden des Gehäuses verbunden sind.

Diese Stäbe bzw. Führungselemente 38 sind in gleichmäßigen Abständen entlang der Außenumfangsfläche des Gehäuses 18 vorgesehen und durchragen jeweils in dem

Masseelement 30 vorgesehene Öffnungen 39, die an entsprechenden Stellen des Masseelements 30 vorgesehen sind. Zudem erstrecken sich die Führungselemente 38 durch Öffnungen 44 (z.B. Bohrungen), die in den Halteelementen 29 ausgebildet sind.

Im Innenraum 22 des Gehäuses 18 des Dämpfungselements 7 ist somit das Masseelement 30 mit den Haltelementen 29 entlang der Führungselemente 38 frei gleitend gelagert.

Das Masseelement 30 ist zwischen Federelementen 40, 41 gehalten, wobei jeweils untere Federelemente 40 das Masseelement 30 stützen und obere Federelemente 41 auf das Masseelement 30 drücken. Die Federelemente 40 und 41 sind jeweils in entsprechenden Öffnungen 43 (z.B. Bohrungen) gehalten bzw. gelagert. So wird für das Masseelement 30 eine in Höhenrichtung verschiebbare translatorische federnde Aufhängung gewährleistet.

Die entsprechenden Federelemente 40, 41 sind beispielhaft als Spiralfedern ausgebildet, wobei jeweils ein Ende der jeweiligen Spiralfeder an dem Deckel bzw. dem Boden fixiert ist und das andere Ende der Spiralfeder in eine Öffnung 43 bzw. einer Grundfläche der Öffnung 43 abgestützt ist, beispielhaft ohne an diese fixiert zu sein.

Die entsprechenden oberseitigen und unterseitigen Federelemente 40, 41 sind jeweils in vertikaler Richtung einander gegenüberliegend angeordnet und in Verlängerung zueinander, wobei jeweils ein Paar von oberen und unteren Federelementen 40, 41 parallel zu den Öffnungen 39 bzw. den Führungselementen 38 angeordnet sind. Somit ist in Umfangsrichtung entlang des Gehäuses 18 beispielhaft immer ein Paar gebildete aus Stab 38 und Federelemente 40, 41 vorgesehen.

Zischen der oberseitigen Wandung 31 des oberen Halteelements 29 und der Innenfläche des Plattenelements 27 ist ein Spalt Sp ausgebildet, der einen oberen Quetschfilm-Kammerbereich 35 zur Aufnahme von Flüssigkeit ausbildet, und zwischen der unterseitigen Wandung 32 des unteren Halteelements 29 und der Innenfläche des Bodenabschnitts 21 ist ein weiterer Spalt Sp ausgebildet, der einen unteren Quetschfilm-Kammerbereich 36 zur Aufnahme von Flüssigkeit ausbildet.

Die oberen und unteren Quetschfilm-Kammerbereiche 35 und 36 sind jeweils mit einem in verbliebenen Hohlräumen im Innenraum 22 ausgebildeten Transferkammerbereich 34 ausgebildet, zur Aufnahme von Flüssigkeit. Beispielhaft ist der Transferkammerbereich 34 beispielhaft zwischen der Außenumfangsfläche des Masseelementes 30 und der Innenumfangsfläche des Gehäuses 18 ausgebildet, die das Masseelement 30 in dessen Umfangsrichtung beispielhaft komplett umgibt und im Wesentlichen im vorliegenden Beispiel einen gleichbleibenden Querschnitt aufweist.

Das Masseelement 30 schwingt bei auftretender Vibration bei der zerspanenden Bearbeitung eines Werkstücks im Innenraum 22 in der Flüssigkeit entlang der Führungselemente 38 gleitend auf und ab.

Hierdurch werden die Volumen der Spaltbereiche der Spalte Sp bzw. der Kammerbereiche 35 und 36 variiert, wodurch insbesondere bei sich nach oben bewegendem Masseelement 30 der untere Spalt Sp sich vergrößert und sich das Volumen des Kammerbereichs 36 vergrößert und der obere Spalt Sp sich verkleinert und sich das Volumen des Kammerbereichs 35 verkleinert, bzw. wodurch insbesondere bei sich nach unten bewegendem Masseelement 30 der obere Spalt Sp sich vergrößert und sich das Volumen des Kammerbereichs 35 vergrößert und der untere Spalt Sp sich verkleinert und sich das Volumen des Kammerbereichs 36 verkleinert.

Wenn beispielsweise in der Figur 4 sich das Masseelement 30 nach oben bewegt, wird, wenn zumindest der untere Teil des Innenraums 22 mit Flüssigkeit gefüllt ist (d.h. wenn der Innenraum 22 nur teilweise mit Flüssigkeit befüllt ist), das Kammervolumen des unteren Spalts bzw. des Kammerbereichs 36 vergrößert, und die im Transferkammerbereich 34 befindliche Flüssigkeit wird in den Spalt befördert bzw. durch eine im Spalt auftretende, radiale Saugströmung aus dem Transferkammerbereich 34 in den Spalt gesaugt (vgl. die rechte Detaildarstellung an der rechten Unterseite in Figur 4).

Wenn sich das Masseelement 30 wieder nach unten bewegt, wird das Kammervolumen des unteren Spalts bzw. des Kammerbereichs 36 verkleinert und die in dieser befindliche Flüssigkeit wird in den Transferkammerbereich 34 befördert bzw. durch eine im Spalt auftretende, radiale Druckströmung in die Transferkammer 34 herausgedrückt (vgl. die rechte Detaildarstellung an der rechten Unterseite in Figur 4).

Wenn der Innenraum 22 und die Kammerbereiche 34, 35 und 36 vollständig mit Flüssigkeit gefüllt sind und sich das Masseelement 30 nach unten bewegt, wird das

Kammervolumen des oberen Spalts bzw. des Kammerbereichs 35 vergrößert, und die im Transferkammerbereich 34 befindliche Flüssigkeit wird in den Spalt befördert bzw. durch eine im Spalt auftretende, radiale Saugströmung aus dem Transferkammerbereich 34 in den Spalt gesaugt (vgl. die rechte Detaildarstellung an der rechten Unterseite in Figur 4). Wenn sich das Masseelement 30 wieder nach oben bewegt, wird das Kammervolumen des oberen Spalts bzw. des Kammerbereichs 35 verkleinert und die in dieser befindliche Flüssigkeit wird in den Transferkammerbereich 34 befördert bzw. durch eine im Spalt auftretende, radiale Druckströmung in die Transferkammer 34 herausgedrückt (vgl. die rechte Detaildarstellung an der rechten Unterseite in Figur 4).

Somit tritt aufgrund der in den Spaltbereichen auftretenden Druck- bzw. Saugströmungen bei teilweise als auch bei vollständig mit Flüssigkeit gefülltem Innenbereich 22 des Dämpfungselements 7 eine Dämpfungswirkung einer Schwingung des Masseelements 30 auf, die sich als Schwingungsdämpfung auch auf die gesamte Bearbeitungseinheit auswirkt, insbesondere wenn das Dämpfungselement starr an bzw. in der Bearbeitungseinheit angebracht ist.

Somit kann zumindest einer der Kammerbereiche an einer Unterseite des Innenraums des Dämpfungsgehäuses unterhalb des in axialer Richtung schwingenden Masseelements ausgebildet sein. Optional können ein oder mehrere der Kammerbereiche an einer Oberseite des Innenraums des Dämpfungsgehäuses oberhalb des in axialer Richtung schwingenden Masseelements ausgebildet sein.

In diesem Falle kann, wie vorstehend beschrieben, der Innenraum zumindest teilweise mit Flüssigkeit gefüllt sein, wobei bei teilweiser Füllung des Innenraums das Dämpfungselement derart an der Bearbeitungseinheit ausgerichtet ist, dass die axiale Schwingungsrichtung des Masseelements vertikal oder zumindest im Wesentlichen vertikal ausgerichtet ist (d.h. insbesondere derart, dass der/die an der Unterseite angeordnete(n) Kammerbereich(e) mit Flüssigkeit gefüllt sind, z.B. bei einem planar ausgebildeten Quetschfilm-Spalt im Bereich der Unterseite des Gehäuses bzw. an der Unterseite des Innenraums).

Hierbei reicht es vorteilhaft aus, nur ein kleines Volumen von Flüssigkeit in den Innenraum einzufüllen, derart, dass gerade der/die unteren Kammerbereich(e) bzw. Quetschfilm-Spalt mit Flüssigkeit befüllt sind bzw. gerade der Bereich des Innenraums derart gefüllt ist, dass der/die an der Unterseite angeordnete(n) Kammerbereich(e) bzw. ein planar ausgebildeter Quetschfilm-Spalt im Bereich der Unterseite des Gehäuses bzw. an der Unterseite des Innenraums mit Flüssigkeit bedeckt sind/ist.

Bei Oszillation des Masseelements kann das verwendete Öl bzw. die Flüssigkeit aus dem unteren Kammerbereich bzw. dem unteren Spalt radial nach außen gedrückt bzw. radial nach innen gesogen werden. Auf diesem physikalischen Effekt ("Squeeze-Film-Effekt") beruht die auf die Oszillation des Masseelements wirkende Dämpfung, die auch über eine starre Befestigung des Dämpfungselements an der Bearbeitungseinheit der Werkzeugmaschine Schwingungen an der Bearbeitungseinheit dämpft.

Die Dämpfungswirkung kann erhöht werden, wenn der Innenraum vollständig mit Flüssigkeit befüllt wird, so dass sowohl obere als auch untere Kammerbereiche bzw. Spalts, zwischen denen das Masseelement oszilliert, mit Flüssigkeit gefüllt sind, da der "Squeeze-Film-Effekt" dann phasenverschoben an der Ober- und der Unterseite des Innenraums an entsprechenden Kammerbereichen bzw. Spalts auftritt, wobei an einer Seite jeweils Flüssigkeit radial nach außen gedrückt wird, wenn auf der gegenüberliegenden Seite Flüssigkeit radial nach innen gesogen wird und umgekehrt.

Bei einer horizontalen bzw. im Wesentlichen horizontalen (oder flach schrägen) Ausrichtung der axialen Schwingungsrichtung des Masseelements der Dämpfungseinheit (z.B. zum Dämpfen von Schwingungen mit horizontaler Hauptkomponente) ist bevorzugt der Innenraum vollständig mit Flüssigkeit, insbesondere Öl, befüllt.

Das Masseelement hat bevorzugt eine Masse von zwischen 50 und 120 kg, vorteilhafter Weise zwischen 75 und 150 kg, insbesondere 100 (+/- 5) kg. Die mittlere Spaltbreite ist insbesondere bevorzugt kleiner als 10 mm, bzw. bevorzugt kleiner 5 mm und insbesondere im Wesentlichen 1 mm.

Bei Experimenten an Werkzeugmaschinen mit einer Bearbeitungseinheit, die mit einer Quetschfilm-Dämpfungseinheit der vorstehend beschriebenen beispielhaften Bauweise ausgestattet war, konnte nachgewiesen werden, dass bei Bearbeitungen eines Werkstücks nach Anbringung einer Quetschfilm-Dämpfungseinheit an der Bearbeitungseinheit bei Steigerung des Zeitspanvolumens um bis zu 500 % gleiche Oberflächengüten auf der bearbeiteten Werkstückoberfläche erzielbar waren, wie bei der Bearbeitung an einer Werkzeugmaschine ohne Dämpfungseinheit.

Die gewählte Flüssigkeit, insbesondere bevorzugt ein Öl, und auch die gewählte Masse des Masseelementes können auf die erwarteten Vibrationsfrequenzen bei einer solchen Werkzeugmaschine abgestimmt werden.

Im vorliegenden Beispiel ist das Gehäuse 18 beispielhaft temperiert. Da die Viskosität der Flüssigkeit in der Kammer von der Temperatur abhängt, ist es sehr vorteilhaft, das Gehäuse 18 zu temperieren und somit die Dämpfungseigenschaft eben auch über die Temperatur zu steuern. Somit kann gewährleistet werden, dass die Temperatur der Flüssigkeit konstant gehalten werden kann, so dass sich die Viskosität und somit das Schwingungsdämpfungsverhalten während der Bearbeitung des Werkstücks nicht über die Zeit ändert, da die temperaturabhängige Viskosität der Flüssigkeit, insbesondere eines Öls, konstant gehalten wird.

Bei erhöhter Temperatur der Flüssigkeit kann deren Viskosität abnehmen und demnach eine Dämpfung in einem anderen Viskositätsbereich gewährleistet werden, als bei niedrigen Temperaturen der Flüssigkeit.

Die Temperierung kann beispielsweise mit einer Steuervorrichtung gekoppelt sein, die die auftretenden Schwingungsfrequenzen misst und durch die Temperierung des Gehäuses die entsprechenden Dämpfungseigenschaften an die gemessenen Schwingungsfrequenzen anpasst. Eine solche Ausgestaltung wird beispielsweise durch eine entsprechende Regelung der Steuereinrichtung gewährleistet.

Hierbei kann die Temperatur auch gesteuert variiert werden, um gezielt das gewünschte Dämpfungsverhalten durch Einstellen der entsprechend benötigten Viskosität der Flüssigkeit zu steuern.

Bei Verwendung eines Vibrationssensors ist es in besonders vorteilhaften Ausführungsbeispielen auch möglich, einen Regelkreis einzurichten, der die eingestellte Temperatur der Flüssigkeit im Quetschfilm-Dämpfungselement in Abhängigkeit eines Sensorsignals des Vibrationssensors regelt, um dadurch indirekt die Viskosität der Flüssigkeit und folglich indirekt das Schwingungsverhalten zu regeln, um die auftretenden Schwingungen optimiert zu dämpfen.

Zudem ist es möglich, die Art (insbesondere hinsichtlich der Federkonstante) und/oder Anzahl der verwendeten Federn zu ändern und die Dämpfungseinheit an die zu dämpfenden Frequenzbereiche anzupassen. Alleine durch die Änderung der Anzahl der Federn bis zu 100 verwendeter Federn, konnte in Versuchen gezeigt werden, dass dies ermöglichte, den gedämpften Frequenzbereich der Schwingungen bei konstanter schwingender Masse des Dämpfers nur durch Variation der Anzahl der verwendeten Federn zwischen 3 Hz und 100 Hz einzustellen.

Das Schwingungsdämpfungsverhalten kann optimal eingestellt werden, durch Anpassung der Art und/oder Zahl der Federn, der mittleren Spaltbreite der Quetschfilm-Dämpfungsanordnung und durch Wahl der Flüssigkeit bzw. deren Viskosität sowie durch Einstellung bzw. Variation der Viskosität durch Temperierung, ggf. auf Basis eines Regelkreises mit einem an die Temperierungssteuerung angebundenen Vibrationssensor.

Die vorliegende Erfindung ist nicht auf die Ausführung einer Quetschfilmdämpfung beschränkt. Vielmehr können auch andersartige Dämpfungselemente verwendet werden, und insbesondere auch andere Arten von fluidischen Dämpfungsmechanismen mit Masse-Feder-Systemen (z.B. neben fluidischen Dämpfungsmechanismen mit Masse-Feder-Systemen auf Quetschfilm-Basis auch fluidischen Dämpfungsmechanismen mit Masse-Feder-Systeme auf Basis von Drosselströmungen). Masse-Feder-Systeme bieten generell den Vorteil, dass die vorgespannte schwingungsfähige Masse eine besonders kompakte Bauweise mit hoher Leistungsdichte ermöglicht.

Hierbei kann das Dämpfungsverhalten im Baukastenprinzip bei fluidischen Dämpfungsmechanismen mit Masse-Feder-Systemen einfach variabel eingestellt werden, indem die Masse des Masseelements durch die Materialwahl bzw. der Dichte des verwendeten Materials passend auswählbar ist (hierzu können eine Mehrzahl von Masseelementen gleicher Größe und Form in unterschiedlichen Massen aufgrund unterschiedlicher Dichten bereitgestellt werden und im Dämpfungselement ausgewechselt werden), indem die Art und insbesondere Anzahl der verwendeten Federn veränderbar ist zur Anpassung des Frequenzbereichs der zu dämpfenden Schwingungen, indem die Spalthöhe der Spalte bzw. der Flüssigkeitskammern einstellbar ist (z.B. durch Justierung bzw. Auswechslung des oberen Plattenelements 27 und/oder der Halteelemente 29), indem die verwendete Flüssigkeit in Abhängigkeit der Viskosität gewählt wird, und/oder indem die Viskosität der Flüssigkeit durch Einstellung der Temperierung der Dämpfungseinheit bzw. der Kammerwandungen einstellbar bzw. feinjustierbar ist.

Zudem können mehrere Dämpfungselemente mit jeweils zueinander verschiedenen Zusammenstellungen bezüglich der verwendeten Masse des Masseelements, der verwendeten Spalthöhen, der verwendeten Federn (bzgl. Art und/oder Anzahl), der verwendeten Flüssigkeit und/oder der einzustellenden Temperatur des temperierten Dämpfungselement verwendet werden, um mehrere zu dämpfende Eigenfrequenzen des Maschinensystems der Werkzeugmaschine bzw. der Bearbeitungseinheit gleichzeitig dämpfen zu können.

Die Verwendung von mehreren Dämpfungselementen kann jedoch nicht nur dazu verwendet werden, mehrere Frequenzbereiche bzw. unterschiedliche Frequenzen zu dämpfen, sondern ermöglicht es weiterhin unterschiedliche Schwingungsrichtungen zu dämpfen, wenn die Dämpfungselementen jeweils mit verschiedenen Schwingungsrichtungen des Feder-Masse-Systems an der Bearbeitungseinheit angeordnet werden. Durch die Führungen (z.B. Führungselemente 38) des Feder-Masse-Systems sind auch horizontal ausgerichtete Schwingungsdämpfungen möglich bzw. können horizontale Schwingungen gedämpft werden.

Zudem kann bei Verwendung von mehreren Dämpfungselementen eine Masse der einzelnen Dämpfungselemente verringert werden, so dass mehrere Dämpfungselemente jeweils kompakter ausgestaltet werden können und das Bauvolumen der einzelnen Dämpfungselemente verringert werden kann, so dass vorteilhaft eine einfache und platzsparende Anbringung bzw. Integration der Dämpfer an der Werkzeugmaschine bzw. an der Bearbeitungseinheit ermöglicht wird.

Dies ermöglicht es auch bei kleinerer Masse des Masseelements (z.B. zwischen bevorzugt 20 und 30 kg, bzw. zwischen 10kg und 50kg) platzsparende Dämpfungselemente bereitzustellen, die an kleineren Werkzeugmaschinen (sog. Kleinmaschinen) zur Schwingungsdämpfung eingesetzt werden können, bzw. bei Verwendung von mehreren Dämpfungselementen auch an großen Werkzeugmaschinen (sog. Großmaschinen) verwendbar sind.

Zusammenfassend ermöglicht es die vorliegende Erfindung, eine verbesserte zerspanende Bearbeitung eines Werkstücks an einer Werkzeugmaschine zu ermöglichen, bei der sowohl eine möglichst hohe Bearbeitungspräzision mit hoher erreichbarer Oberflächengüte als auch zudem eine möglichst hohe Produktivität mit hohem Zeitspanvolumen erreicht werden kann.

Insbesondere wird es vorteilhaft möglich, die bei der Bearbeitung des Werkstücks auftretenden Schwingungen zu dämpfen, so dass bei höherem Zeitspanvolumen aufgrund einer Schwingungsdämpfungseinheit an der die Arbeitsspindel tragende Bearbeitungseinheit der Werkzeugmaschine und der damit verbundenen Schwingungsdämpfung während der Bearbeitung des Werkstücks bei höheren Vorschubgeschwindigkeiten und/oder tieferem Eintauchen des Werkzeugs in das Werkstück zur Erhöhung der Produktivität und Arbeitsleistung der Werkzeugmaschine dennoch vorteilhaft eine deutlich erhöhte Bearbeitungspräzision und verbesserte Oberflächengüte erreichbar ist.

## Patentansprüche

1. Bearbeitungseinheit (7) für eine Werkzeugmaschine, mit
- einer Trägerkopfbasis (8) und
- einem eine werkzeugtragende Arbeitsspindel (11) haltenden Spindelträgerkopf (10),
**dadurch gekennzeichnet, dass**
die Bearbeitungseinheit (7) mit einer Dämpfungseinheit (17) zur Dämpfung von bei der Bearbeitung eines Werkstücks an der Werkzeugmaschine auftretenden Schwingungen versehen ist.

2. Bearbeitungseinheit (7) nach Anspruch 1, **dadurch gekennzeichnet, dass** die Trägerkopfbasis (8) mit der Dämpfungseinheit (17) versehen ist und/oder der Spindelträgerkopf (10) mit der Dämpfungseinheit (17) versehen ist, wobei insbesondere die Dämpfungseinheit (17) an einer Außenseite eines Gehäuses (18) der Trägerkopfbasis (8) und/oder an einer Außenseite eines Gehäuses (18) des Spindelträgerkopfs (10) angeordnet ist.

3. Bearbeitungseinheit (7) nach einem der vorherigen Ansprüche, **dadurch gekennzeichnet, dass**
die Dämpfungseinheit (17) als separates Element vorgesehen ist, welches ein- und ausbaubar und/oder lösbar an der Bearbeitungseinheit (7) befestigt ist.

4. Bearbeitungseinheit (7) nach einem der vorherigen Ansprüche, **dadurch gekennzeichnet, dass**
die Dämpfungseinheit (17) eine uniaxiale Dämpfung gewährleistet, und insbesondere dazu eingerichtet ist, eine Dämpfung von Schwingungen in einer Hauptdämpfungswirkungsrichtung zu dämpfen; oder
mehrere Dämpfungseinheiten (17) mit jeweiliger uniaxialer Dämpfung vorgesehen sind, deren Hauptdämpfungswirkungsrichtungen in unterschiedlichen Richtungen der Bearbeitungseinheit (7) ausgerichtet sind.

5. Bearbeitungseinheit (7) nach einem der vorherigen Ansprüche, **dadurch gekennzeichnet, dass**
die Dämpfungseinheit (17) zumindest einen der folgenden Dämpferarten aufweist: viskoelastisches Dämpfungselement, piezoelektrisches Dämpfungselement, elektrodynamisches Dämpfungselement und Quetschfilm-Dämpfungselement.

6. Bearbeitungseinheit (7) nach einem der vorherigen Ansprüche, **dadurch gekennzeichnet, dass**
die Dämpfungseinheit (17) einen fluidischen Dämpfungsmechanismus mit einem Masse-Feder-System umfasst, insbesondere auf Basis einer Quetschfilm-Dämpfung und/oder auf Basis einer Drosselströmungsdämpfung.

7. Bearbeitungseinheit (7) nach Anspruch 6, **dadurch gekennzeichnet, dass** die Dämpfungseinheit (17) ein mittels Federn (40, 41) vorgespanntes Masseelement (30) umfasst, das an Führungen (38) in einer Hauptdämpfungswirkungsrichtung schwingungsfähig gelagert ist,
wobei das Masseelement (30) in einem fluidabgedichteten Innenraum (22) der Dämpfungseinheit (17) schwingungsfähig gelagert ist und Kammerbereiche (34, 35, 36) des Innenraums (22) zumindest teilweise mit einer Flüssigkeit gefüllt sind, insbesondere mit einem Öl.

8. Bearbeitungseinheit (7) nach einem der vorherigen Ansprüche, **dadurch gekennzeichnet, dass**
die Dämpfungseinheit (17) ein Gehäuse (18) aufweist, mit einem Innenraum (22), in welchem ein an zumindest einem Federelement (40, 41) abgestütztes Masseelement (30) schwingend gelagert ist, wobei in der Kammer (22) eine Flüssigkeit vorgesehen ist, welche bei Schwingung des Masseelementes (30) von einem ersten zwischen dem Masseelement (30) und einer Kammerwandung gebildeten Kammerbereich (35) in einen zweiten zwischen dem Masseelement (30) und einer Kammerwandung gebildete Kammerbereich (36) transferierbar ist.

9. Bearbeitungseinheit (7) nach Anspruch 8, **dadurch gekennzeichnet, dass** der Innenraum (22) in seiner Umfangsrichtung eine zylindrische Form aufweist, und ober- und unterseitig von planaren Wandungen (20, 21) begrenzt ist; und/oder das Masseelement (30) in seiner Umfangsrichtung eine zylindrische Form aufweist, und ober- und unterseitig von planaren Wandungen (31, 32) begrenzt wird;
wobei jeweils zwischen den einander gegenüberliegenden Umfangswandungen ein Transferkammerbereich (37) und zwischen den jeweiligen oberseitigen bzw. unterseitige planaren Wandungen (20, 31; 21, 32) ein oberseitiger bzw. ein unterseitiger Kammerbereich (35, 36) gebildet werden, welche aufgrund der Schwingung des Masseelementes ein veränderbares Aufnahmevolumen aufweisen.

10. Bearbeitungseinheit (7) nach Anspruch 8 oder 9, **dadurch gekennzeichnet, dass** das Masseelement (30) oberseitig und unterseitig von zumindest einem Federelement (40, 41) abgestützt wird;
eine Vielzahl von einander gegenüberliegenden Federelementen (40, 41) entlang der Umfangswandung vorgesehen sind, welche das Masseelement (30) oberseitig und unterseitig abstützen; und/oder
das zumindest eine Federelement (40,41) in einer Aufnahmebohrung (43) an einer oberseitigen bzw. unterseitigen Wand des Masseelementes (30) aufgenommen ist und an der entsprechenden gegenüberliegenden Wandung des Innenraums (22) befestigt ist;

11. Bearbeitungseinheit (7) nach einem der Ansprüche 8 bis 10, **dadurch gekennzeichnet, dass**
zwischen der Oberseite des Innenraums (22) und der Unterseite des Innenraums (22) verlaufende Führungen (38) vorgesehen sind, so dass das Masseelement (30) In Richtung der Führungen geführt schwingend gelagert ist.

12. Bearbeitungseinheit (7) nach einem der Anspruch 11, **dadurch gekennzeichnet, dass**
die Führungen (38) durch Stäbe gebildet werden, welche durch zwischen den oberseitigen und unterseitigen Oberflächen des Masseelementes (30) verlaufende Öffnungen (39) ragen,
wobei in gleichmäßigen Abständen entlang des Umfangs des Masseelementes (30) solche Öffnungen (39) vorgesehen sind, durch welche die Stäbe (38) hindurchragen,
wobei jeweils benachbart zu jeder Öffnung (39) ein Federelement (40, 41) vorgesehen ist.

13. Bearbeitungseinheit (7) nach einem der vorherigen Ansprüche, **dadurch gekennzeichnet, dass**
das Gehäuse (18) temperiert ist, und/oder eine Temperatur des Gehäuses (18) einstellbar ist.

14. Bearbeitungseinheit (7) nach Anspruch 13, **dadurch gekennzeichnet, dass** eine Temperatursteuerung zum Einstellen der Temperatur des Gehäuses (18) einen Vibrationssensor aufweist, dessen Vibrationssensorsignal zur Regelung der Temperatur des Gehäuses (18) der Temperatursteuerung zugeführt wird.

15. Werkzeugmaschine mit einer Bearbeitungseinheit (7) nach einem der vorherigen Ansprüche.
